# EUROPEAN PATENT APPLICATION

(11) **EP 2 105 905 A2**
(43) Date of publication of application: **30.09.2009**
(21) Application number: 09004071.8
(22) Date of filing: 20.03.2009
(51) Int. Cl.: G09B 5/02

(54) **Image generation apparatus**

(30) Priority: 26.03.2008 JP 2008080025
(71) Applicant: Namco Bandai Games Inc., Shinagawa-ku Tokyo 140-8590 (JP)
(72) Inventor: Inokuchi, Koji, Tokyo 140-8590 (JP); Motoyama, Hirofumi, Tokyo 140-8590 (JP); Iwasaki, Mineyuki, Tokyo 140-8590 (JP); Tezuaka, Yoshitaka, Tokyo 140-8590 (JP)
(74) Representative: Schmidtchen, Jürgen Christian

(57) **Abstract**

A game apparatus controls a first virtual camera and a second virtual camera in synchronization so that the second virtual camera photographs an object space in a range that cannot be photographed by the first virtual camera due to a limitation range. The game apparatus draws various images in a first drawing area and a second drawing area while controlling the first virtual camera and the second virtual camera in synchronization.

## Description

### BACKGROUND OF THE INVENTION

The present invention relates to an image generation apparatus.

An image generation apparatus that generates an image of an object space viewed from a virtual camera has been known, an object being disposed in the object space. Such an image generation apparatus may set a plurality of virtual cameras in the object space, and may simultaneously display an image of the object space viewed from each virtual camera on a display section. For example, an image generation apparatus that sets a virtual camera that photographs the object space viewed from a driver and a virtual camera that photographs the object space reflected in a rearview mirror has been known (see JP-A-2000-105533).

In such an image generation apparatus, the directions of the virtual cameras are fixed in a forward direction and a backward direction. Moreover, the relationship between the virtual cameras with regard to the position and the angle of view is also fixed. Therefore, even if a plurality of virtual cameras are set, the generated image may not be fully utilized.

### SUMMARY

According to a first aspect of the invention, there is provided an image generation apparatus comprising:
an object space setting section that sets a plurality of objects in an object space;
a virtual camera control section that controls at least one of a position, a direction, and an angle of view of a first virtual camera by using first control information, calculates second control information based on the first control information, and controls at least one of a position, a direction, and an angle of view of a second virtual camera by using the second control information; and
a drawing section that draws an image of the object space viewed from the first virtual camera in a first drawing area, and draws an image of the object space viewed from the second virtual camera in a second drawing area at the same time,
the virtual camera control section setting a limitation range that limits a value indicated by at least one of position control information, direction control information, and angle-of-view control information included in the first control information, calculating the first control information within the limitation range, and calculating the second control information based on the first control information so that a value indicated by at least one of position control information, direction control information, and angle-of-view control information included in the second control information is obtained outside the limitation range.

According to a second aspect of the invention, there is provided an image generation apparatus comprising:
an object space setting section that sets a plurality of objects in an object space;
a virtual camera control section that controls at least one of a position, a direction, and an angle of view of a first virtual camera by using first control information, calculates second control information based on the first control information, and controls at least one of a position, a direction, and an angle of view of a second virtual camera by using the second control information; and
a drawing section that draws an image of the object space viewed from the first virtual camera in a first drawing area, and draws an image of the object space viewed from the second virtual camera in a second drawing area at the same time,
wherein the virtual camera control section performs at least one of a position conversion process that calculates the second control information based on the first control information so that a relationship between the position of the first virtual camera and the position of the second virtual camera changes, a direction conversion process that calculates the second control information based on the first control information so that a relationship between the direction of the first virtual camera and the direction of the second virtual camera changes, and an angle-of-view conversion process that calculates the second control information based on the first control information so that a relationship between the angle of view of the first virtual camera and the angle of view of the second virtual camera changes, based on operation information from an operation section or a given algorithm.

According to a third aspect of the invention, there is provided an image generation apparatus comprising:
an object space setting section that sets a plurality of objects in an object space;
a virtual camera control section that controls at least one of a position, a direction, and an angle of view of a first virtual camera by using first control information, calculates second control information based on the first control information, and controls at least one of a position, a direction, and an angle of view of a second virtual camera by using the second control information; and
a drawing section that draws an image of the object space viewed from the first virtual camera in a first drawing area, and draws an image of the object space viewed from the second virtual camera in a second drawing area at the same time,
wherein the virtual camera control section performs at least one of a position change process that changes a relationship between the position of the first virtual camera and the position of the second virtual camera, a direction change process that changes a relationship between the direction of the first virtual camera and the direction of the second virtual camera, and an angle-of-view change process that changes a relationship between the angle of view of the first virtual camera and the angle of view of the second virtual camera changes, based on operation information from an operation section or a given algorithm.

According to a fourth aspect of the invention, there is provided an image generation apparatus comprising:
an object space setting section that sets a plurality of objects in an object space;
a movement/motion control section that controls at least one of a movement and a motion of a specific object among the plurality of objects;
a virtual camera control section that calculates first control information based on position information of the specific object, controls at least one of a position, a direction, and an angle of view of a first virtual camera by using the first control information, calculates second control information based on the position information of the specific object, and controls at least one of a position, a direction, and an angle of view of a second virtual camera by using the second control information; and
a drawing section that draws an image of the object space viewed from the first virtual camera in a first drawing area, and draws an image of the object space viewed from the second virtual camera in a second drawing area at the same time.

### BRIEF DESCRIPTION OF THE SEVERAL VIEWS OF THE DRAWING

FIG. 1 is an external view showing a game apparatus 10 according to one embodiment of the invention.
FIG. 2 is a functional block diagram showing a game apparatus 10 according to one embodiment of the invention.
FIG. 3 shows an object space of a game apparatus 10 according to one embodiment of the invention.
FIG. 4 illustrates a method of controlling a game apparatus 10 according to one embodiment of the invention.
FIG. 5 illustrates a method of controlling a game apparatus 10 according to one embodiment of the invention.
FIGS. 6A and 6B show images generated by a game apparatus 10 according to one embodiment of the invention.
FIG. 7 illustrates a method of controlling a game apparatus 10 according to one embodiment of the invention.
FIG. 8 illustrates a method of controlling a game apparatus 10 according to one embodiment of the invention.
FIG. 9 illustrates a method of controlling a game apparatus 10 according to one embodiment of the invention.
FIG. 10 illustrates a method of controlling a game apparatus 10 according to one embodiment of the invention.
FIG. 11 illustrates a method of controlling a game apparatus 10 according to one embodiment of the invention.
FIG. 12 shows images generated by a game apparatus 10 according to one embodiment of the invention.
FIG. 13 illustrates a method of controlling a game apparatus 10 according to one embodiment of the invention.
FIG. 14 is a flowchart showing a flow of a process performed by a game apparatus 10 according to one embodiment of the invention.
FIG. 15 is a flowchart showing a flow of a process performed by a game apparatus 10 according to one embodiment of the invention.
FIG. 16 is a flowchart showing a flow of a process performed by a game apparatus 10 according to one embodiment of the invention.
FIG. 17 is a flowchart showing a flow of a process performed by a game apparatus 10 according to one embodiment of the invention.

### DETAILED DESCRIPTION OF THE EMBODIMENT

The invention may provide an image generation apparatus that can generate various images by using a plurality of virtual cameras.
(1) According to one embodiment of the invention, there is provided an image generation apparatus comprising:
   an object space setting section that sets a plurality of objects in an object space;
   a virtual camera control section that controls at least one of a position, a direction, and an angle of view of a first virtual camera by using first control information, calculates second control information based on the first control information, and controls at least one of a position, a direction, and an angle of view of a second virtual camera by using the second control information; and
   a drawing section that draws an image of the object space viewed from the first virtual camera in a first drawing area, and draws an image of the object space viewed from the second virtual camera in a second drawing area at the same time,
   the virtual camera control section setting a limitation range that limits a value indicated by at least one of position control information, direction control information, and angle-of-view control information included in the first control information, calculating the first control information within the limitation range, and calculating the second control information based on the first control information so that a value indicated by at least one of position control information, direction control information, and angle-of-view control information included in the second control information is obtained outside the limitation range.
   According to one embodiment of the invention, there is provided a program causing a computer to function as the above-described sections. According to one embodiment of the invention, there is provided a computer-readable information storage medium storing (or recording) a program that causes a computer to function as the above-described sections.
   In the above embodiments, the first virtual camera and the second virtual camera can be controlled in synchronization so that the second virtual camera photographs the object space in a range that cannot be photographed by the first virtual camera due to the limitation range. Therefore, various images can be drawn in the first drawing area and the second drawing area while controlling the first virtual camera and the second virtual camera in synchronization.
(2) The above image generation apparatus may further comprise:
   a movement/motion control section controlling at least one of a movement and a motion of a specific object among the plurality of objects; and
   a determination section determining whether or not the specific object is positioned within the angle of view of the second virtual camera,
   wherein the virtual camera control section calculates the first control information based on position information of the specific object; and
   wherein the drawing section draws a special image in the second drawing area based on image data that has been previously drawn and stored in a storage section when the specific object has been determined not to be positioned within the angle of view of the second virtual camera.
   This makes it possible a special image to be drawn in the second drawing area when the specific object is not drawn in the second drawing area as a result of calculating the first control information based on the position information of the specific object.
(3) The above image generation apparatus may further comprise:
   a movement/motion control section controlling at least one of a movement and a motion of a specific object among the plurality of objects; and
   a determination section determining whether or not the specific object is positioned within the angle of view of the second virtual camera,
   wherein the virtual camera control section calculates the first control information based on position information of the specific object, and controls at least one of the position, the direction, and the angle of view of the second virtual camera by using control information that is not based on the first control information when the specific object has been determined not to be positioned within the angle of view of the second virtual camera.
   This makes it possible an image generated by controlling the second virtual camera asynchronously with the first virtual camera to be drawn in the second drawing area when the specific object is not drawn in the second drawing area as a result of calculating the first control information based on the position information of the specific object.
(4) According to one embodiment of the invention, there is provided an image generation apparatus comprising:
   an object space setting section that sets a plurality of objects in an object space;
   a virtual camera control section that controls at least one of a position, a direction, and an angle of view of a first virtual camera by using first control information, calculates second control information based on the first control information, and controls at least one of a position, a direction, and an angle of view of a second virtual camera by using the second control information; and
   a drawing section that draws an image of the object space viewed from the first virtual camera in a first drawing area, and draws an image of the object space viewed from the second virtual camera in a second drawing area at the same time,
   wherein the virtual camera control section performs at least one of a position conversion process that calculates the second control information based on the first control information so that a relationship between the position of the first virtual camera and the position of the second virtual camera changes, a direction conversion process that calculates the second control information based on the first control information so that a relationship between the direction of the first virtual camera and the direction of the second virtual camera changes, and an angle-of-view conversion process that calculates the second control information based on the first control information so that a relationship between the angle of view of the first virtual camera and the angle of view of the second virtual camera changes, based on operation information from an operation section or a given algorithm.
   According to one embodiment of the invention, there is provided a program causing a computer to function as the above-described sections. According to one embodiment of the invention, there is provided a computer-readable information storage medium storing (or recording) a program that causes a computer to function as the above-described sections.
   In the above embodiments, the relationship between the position of the first virtual camera and the position of the second virtual camera may be the distance between the position of the first virtual camera and the position of the second virtual camera, the relationship between the direction of the first virtual camera and the direction of the second virtual camera may be the angle formed by the direction of the first virtual camera and the direction of the second virtual camera, and the relationship between the angle of view of the first virtual camera and the angle of view of the second virtual camera may be the ratio of the angle of view of the first virtual camera to the angle of view of the second virtual camera, for example.
   According to the above embodiments, various images can be drawn in the first drawing area and the second drawing area while controlling the first virtual camera and the second virtual camera in synchronization by performing at least one of the position conversion process, the direction conversion process, and the angle-of-view conversion process.
(5) According to one embodiment of the invention, there is provided an image generation apparatus comprising:
   an object space setting section that sets a plurality of objects in an object space;
   a virtual camera control section that controls at least one of a position, a direction, and an angle of view of a first virtual camera by using first control information, calculates second control information based on the first control information, and controls at least one of a position, a direction, and an angle of view of a second virtual camera by using the second control information; and
   a drawing section that draws an image of the object space viewed from the first virtual camera in a first drawing area, and draws an image of the object space viewed from the second virtual camera in a second drawing area at the same time,
   wherein the virtual camera control section performs at least one of a position change process that changes a relationship between the position of the first virtual camera and the position of the second virtual camera, a direction change process that changes a relationship between the direction of the first virtual camera and the direction of the second virtual camera, and an angle-of-view change process that changes a relationship between the angle of view of the first virtual camera and the angle of view of the second virtual camera changes, based on operation information from an operation section or a given algorithm.
   According to one embodiment of the invention, there is provided a program causing a computer to function as the above-described sections. According to one embodiment of the invention, there is provided a computer-readable information storage medium storing (or recording) a program that causes a computer to function as the above-described sections.
   In the above embodiments, the relationship between the position of the first virtual camera and the position of the second virtual camera may be the distance between the position of the first virtual camera and the position of the second virtual camera, the relationship between the direction of the first virtual camera and the direction of the second virtual camera may be the angle formed by the direction of the first virtual camera and the direction of the second virtual camera, and the relationship between the angle of view of the first virtual camera and the angle of view of the second virtual camera may be the ratio of the angle of view of the first virtual camera to the angle of view of the second virtual camera, for example.
   According to the above embodiments, various images can be drawn in the first drawing area and the second drawing area while controlling the first virtual camera and the second virtual camera in synchronization by performing at least one of the position change process, the direction change process, and the angle-of-view change process.
(6) According to one embodiment of the invention, there is provided an image generation apparatus comprising:
   an object space setting section that sets a plurality of objects in an object space;
   a movement/motion control section that controls at least one of a movement and a motion of a specific object among the plurality of objects;
   a virtual camera control section that calculates first control information based on position information of the specific object, controls at least one of a position, a direction, and an angle of view of a first virtual camera by using the first control information, calculates second control information based on the position information of the specific object, and controls at least one of a position, a direction, and an angle of view of a second virtual camera by using the second control information; and
   a drawing section that draws an image of the object space viewed from the first virtual camera in a first drawing area, and draws an image of the object space viewed from the second virtual camera in a second drawing area at the same time.
   According to one embodiment of the invention, there is provided a program causing a computer to function as the above-described sections. According to one embodiment of the invention, there is provided a computer-readable information storage medium storing (or recording) a program that causes a computer to function as the above-described sections.
   According to the above embodiments, the first virtual camera and the second virtual camera can be controlled in synchronization by causing the first virtual camera and the second virtual camera to face the specific object.
(7) In each of the above image generation apparatuses,
   the virtual camera control section may calculate the first control information based on position information of a first portion of the specific object, and calculate the second control information based on position information of a second portion of the specific object.
   This makes it possible to control the first virtual camera and the second virtual camera in synchronization by causing the first virtual camera to face the first portion and causing the second virtual camera to face the second portion.
(8) Each of the above image generation apparatuses may further comprise:
   a sound generation section generating sound to be output by a sound output section based on a position of a virtual sound source that is provided in an object among the plurality of objects, at least one of the position, the direction, and the angle of view of the first virtual camera, and at least one of the position, the direction, and the angle of view of the second virtual camera.
   This makes it possible to change sound in synchronization with the image drawn in the first drawing area and the image drawn in the second drawing area.
(9) Each of the above image generation apparatuses may further comprise:
   a sound generation section generating sound to be output by a sound output section based on a drawing ratio of an object that is one of the plurality of objects and has a virtual sound source in the first drawing area and a drawing ratio of the object in the second drawing area.
   This makes it possible to change sound in synchronization with the image drawn in the first drawing area and the image drawn in the second drawing area.
(10) In each of the above image generation apparatuses,
   the virtual camera control section may control at least one of the position, the direction, and the angle of view of the first virtual camera, and at least one of the position, the direction, and the angle of view of the second virtual camera based on position information of an object among the plurality of objects when a given condition has been satisfied so that an intersecting line between a side surface of a truncated pyramidal field of view range defined by the first virtual camera and a side surface of a truncated pyramidal field of view range defined by the second virtual camera corresponds to a position of the object.

This makes it possible to draw the specific object so that the specific object is partially drawn in each of the first drawing area and the second drawing area, and the portions of the specific object partially drawn in the first drawing area and the second drawing area are connected when the image displayed in the first drawing area is adjacent to the image displayed in the second drawing area.

Embodiments of the invention will now be described below. Note that the embodiments described below do not unduly limit the scope of the invention as stated in the claims. Also, not all the elements described in the following embodiments should be taken as essential requirements of the invention.

### 1. External configuration

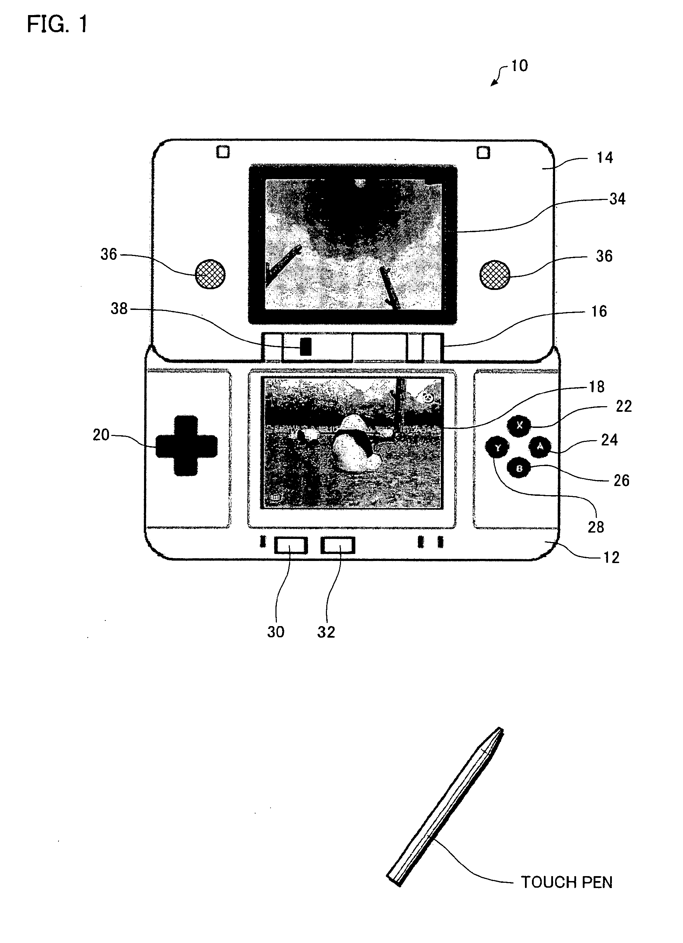

FIG. 1 is an external view showing a game apparatus 10 (i.e., image generation apparatus) according to one embodiment of the invention. The game apparatus 10 shown in FIG 1 is formed so that the game apparatus 10 can be carried by the player (operator or observer). The player can play a game while holding the game apparatus 10. A lower main body 12 and an upper main body 14 of the game apparatus 10 are connected via a hinge section 16. The lower main body 12 and the upper main body 14 can be rotated around the axis of the hinge section 16. A first display section 18 that outputs an image is provided at the center of the lower main body 12. An arrow key 20, four buttons 22 to 28 (first to fourth button), a start button 30, and a select button 32 that allow the player to input operation information are provided around the first display section 18 of the lower main body 12. A second display section 34 that outputs an image is provided at the center of the upper main body 14. A speaker 36 (i.e., sound output section 44) that outputs sound is provided on each side of the second display section 34. A microphone 38 (i.e., sound input section 42) that allows the player to input sound (voice input) is provided in the hinge section 16.

The first display section 18 of the lower main body 12 has a structure formed by stacking a liquid crystal display and a touch panel so that the position of a contact operation performed by the player in the display area of the first display section 18 can be detected. For example, when the player has brought the tip of a touch pen shown in FIG. 1 into contact with the first display section 18, the game apparatus 10 detects the contact position of the tip of the touch pen with the first display section 18. Therefore, the player can also input operation information by bringing the tip of the touch pen into contact with the first display section 18.

The game apparatus 10 displays an image of an object space (i.e., virtual three-dimensional space) viewed from a virtual camera on the first display section 18 and the second display section 34, and receives the operation information input by the player using the arrow key 20, the first to fourth buttons 22 to 28, and the first display section 18 to execute a breeding game in which the player raises a character (i.e., specific object) disposed in the object space. The game apparatus 10 sets a first virtual camera and a second virtual camera in the object space, and displays an image of the object space viewed from the first virtual camera on the first display section 18 while displaying an image of the object space viewed from the second virtual camera on the second display section 34.

### 2. Functional blocks

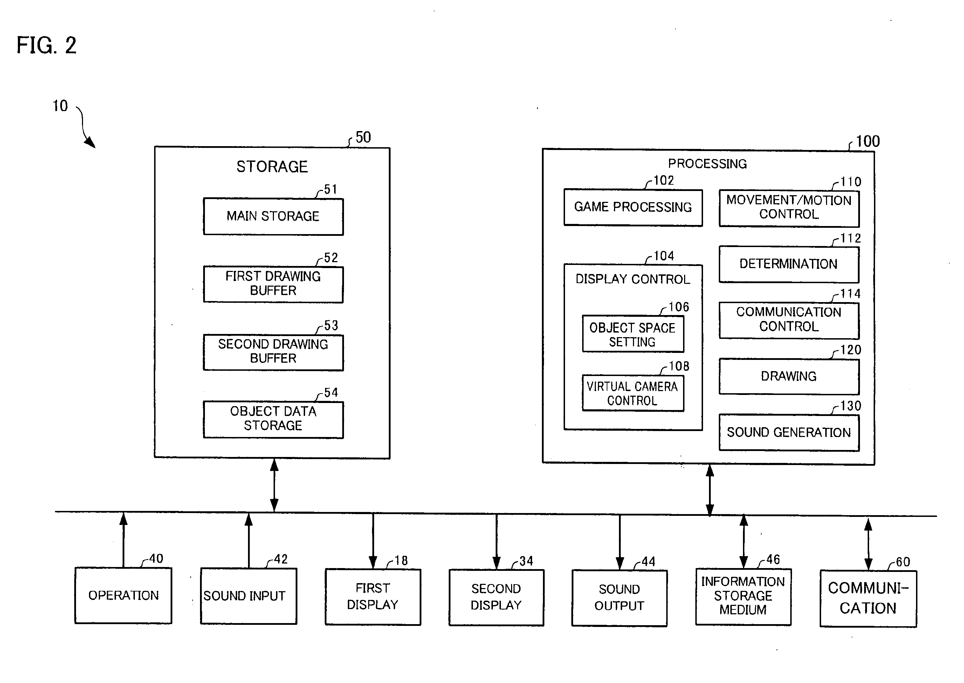

FIG. 2 is a functional block diagram showing the game apparatus 10 according to this embodiment. The game apparatus 10 according to this embodiment may have a configuration in which some of the elements (sections) shown in FIG. 2 are omitted.

An operation section 40 allows the player to input operation data. The function of the operation section 40 may be implemented by the arrow key 20, the first to fourth buttons 22 to 28, a lever, a steering wheel, or the like.

A sound input section 42 allows the player to input sound such as voice or a clap. The function of the sound input section 42 may be implemented by the microphone 38 or the like.

The first display section 18 and the second display section 34 output images generated by the game apparatus 10. The function of the first display section 18 and the second display section 34 may be implemented by a CRT display, a liquid crystal display, a plasma display, a projector, a head mount display (HMD), or the like. In this embodiment, the first display section 18 is implemented by a touch panel display having a structure formed by stacking a liquid crystal display and a touch panel that detects a contact position. Therefore, the first display section 18 according to this embodiment also functions as the operation section 40. The touch panel is formed using a material having a high light transmittance so that the visibility of an image is maintained even when the touch panel is stacked on the liquid crystal display. The touch panel electrically detects a contact position using a resistive method (e.g., four-wire resistive method or five-wire resistive method), a capacitance method, or the like. The touch panel detects a contact operation using an input instrument (e.g., touch pen shown in FIG. 1) and a contact operation with the fingertip of the player.

A sound output section 44 outputs sound generated by the game apparatus 10. The function of the sound output section 44 may be implemented by the speaker 36, a headphone, or the like.

An information storage medium 46 (computer-readable medium) stores a program, data, and the like. The function of the information storage medium 46 may be implemented by a memory card, an optical disk (CD or DVD), a magneto-optical disk (MO), a magnetic disk, a hard disk, a magnetic tape, or the like.

A program and data that cause a processing section 100 to perform various processes are stored in the information storage medium 46. Specifically, the information storage medium 46 stores a program that causes a computer to function as each section according to this embodiment (i.e., a program that causes a computer to perform the process of each section). The information storage medium 46 also stores various types of data such as model data of various objects (e.g., character object) and an attribute parameter of a character object.

A storage section 50 functions as a work area for the processing section 100, a communication section 60, and the like. The function of the storage section 50 may be implemented by a RAM, a VRAM, or the like. The storage section 50 according to this embodiment includes a main storage section 51 that is used as a work area for the processing section 100, a first drawing buffer 52 (i.e., first drawing area) in which an image displayed on the first display section 18 is drawn, a second drawing buffer 53 (i.e., second drawing area) in which an image displayed on the second display section 34 is drawn, and an object data storage section 54 that stores model data of an object.

The communication section 60 performs various types of control that enables communication with the outside (e.g., server or another portable terminal). The function of the communication section 60 may be implemented by hardware such as a processor or a communication integrated circuit (ASIC), a program, and the like.

A program (data) that causes a computer to function as each section according to this embodiment may be distributed to the information storage medium 46 (storage section 50) from an information storage medium included in a host device (server) through a network and the communication section 60. Use of the information storage medium included in the host device (server) is also included within the scope of the invention.

The processing section 100 (processor) performs a game process, an image generation process, a sound generation process, and the like based on the operation information from the operation section 40, the sound input section 42, and the first display section 18, a program, and the like. The processing section 100 performs various processes using the storage section 50 as a work area. The function of the processing section 100 may be implemented by hardware such as a processor (e.g., CPU or DSP) or an integrated circuit (IC) (e.g., ASIC) and a program.

The processing section 100 according to this embodiment includes a game processing section 102, a display control section 104, an object space setting section 106, a virtual camera control section 108, a movement/motion control section 110, a determination section 112, a communication control section 114, a drawing section 120, and a sound generation section 130. Note that the processing section 100 may have a configuration in which some of these sections are omitted.

The game processing section 110 performs a process that starts the game when game start conditions have been satisfied, a process that proceeds with the game, a process that calculates game results, a process that finishes the game when game finish conditions have been satisfied, and the like. The game processing section 110 also performs a process that measures the passage of time in the object space (game space), a process that updates an attribute parameter of a character object, and the like as a process that controls the progress of the game.

The display control section 104 controls display of an image (object image) displayed on the first display section 18 and the second display section 34. Specifically, the display control section 110 generates a display target object (e.g., character (i.e., specific object), moving object (i.e., specific object), course, building, tree, pillar, wall, map, or background), indicates display of an object and a display position, or causes an object to disappear, for example. Specifically, the display control section 110 registers a generated object in an object list, transfers the object list to the drawing section 120 or the like, or deletes an object that has disappeared from the object list, for example.

When an object has moved due to the operation information input from the player, a program, or the like, the display control section 104 displays an image that indicates the movement of the object. The game apparatus 10 according to this embodiment sets an object in the three-dimensional object space. The display control section 104 includes the object space setting section 106 and the virtual camera control section 108.

The object space setting section 106 disposes an object (object formed by a primitive such as a polygon, free-form surface, or subdivision surface) that represents a display object (e.g., character, moving object, course, building, tree, pillar, wall, map, or background) in the object space. Specifically, the object space setting section 106 determines the position and the rotational angle (synonymous with orientation or direction) of the object in a world coordinate apparatus, and disposes the object at the determined position (X, Y, Z) and the determined rotational angle (rotational angles around X, Y, and Z axes).

The virtual camera control section 108 controls a virtual camera (viewpoint) for generating an image viewed from a given (arbitrary) viewpoint in the object space. Specifically, the virtual camera control section 108 controls the position (X, Y, Z) or the rotational angle (rotational angles around X, Y, and Z axes) of the virtual camera (controls the viewpoint position, direction, or angle of view).

For example, when photographing a character using the virtual camera, a gaze point (i.e., position information of a specific object) that specifies the direction of the virtual camera is set on the character, and the position or the rotational angle (i.e., direction) of the virtual camera is controlled so that the virtual camera aims at the gaze point that changes corresponding to a change in the position or rotation of the character. In this case, the virtual camera may be controlled based on information such as the position, the rotational angle, or the speed of the character (gaze point) calculated by the movement/motion control section 110 described later. Alternatively, the virtual camera may be rotated by a predetermined rotational angle, or may be moved along a predetermined path. In this case, the virtual camera control section 108 controls the virtual camera based on predetermined control information for specifying the position (moving path) or the rotational angle of the virtual camera.

The virtual camera control section 108 according to this embodiment controls at least one of the position, the direction, and the angle of view of the first virtual camera using first control information that changes based on the operation information from the operation section 40, the sound input section 42, and the first display section 18, position information of a specific object, a given algorithm, and the like, converts the first control information to second control information, and controls at least one of the position, the direction, and the angle of view of the second virtual camera using the second control information. Specifically, the virtual camera control section 108 performs the above-mentioned control processes on the first virtual camera and the second virtual camera in synchronization so that the second control information immediately changes when the first control information has changed.

The movement/motion control section 110 calculates the movement/motion of a specific object (movement/motion simulation). Specifically, the movement/motion processing section 110 causes a specific object to move in the object space or to make a motion (animation) based on the operation information from the operation section 40, the sound input section 42, and the first display section 18, a program (movement/motion algorithm), various types of data (motion data), and the like. Specifically, the movement/motion processing section 110 performs a simulation process that sequentially calculates movement information (position, rotational angle, speed, or acceleration) and motion information (position or rotational angle of each part that forms a moving object) of a specific object every frame (1/60th of a second). Note that the term "frame" refers to a time unit employed when performing a specific object movement/motion process (simulation process) and a drawing process.

In this embodiment, an attribute parameter, movement pattern data, a movement/motion algorithm, motion data, and the like are set corresponding to each of a plurality of specific objects. The movement/motion control section 110 causes a specific object to move or make a motion based on the operation information from the operation section 40, the sound input section 42, and the first display section 18, the attribute parameter, the movement pattern data, and the like. The movement/motion control section 110 calculates the moving amount (moving speed of the moving object) corresponding to each frame based on the movement/motion algorithm, the motion data, and the operation information set corresponding to the specific object, and calculates the rotation amount (rotational speed) of the moving object corresponding to each frame to calculate a coordinate transformation matrix M of the moving object. The movement/motion processing section 110 multiplies vertex coordinates P_{K-1} of the moving object in the (K-1)th frame by the coordinate transformation matrix M to calculate vertex coordinates P_{K} (=P_{K-1}×M) of the moving object in the Kth frame.

The determination section 112 determines whether or not a specific object or a specific portion of a specific object is positioned within the angle of view of the second virtual camera. Specifically, the determination section 112 determines whether or not a vector that connects the position of the second virtual camera and a representative point of a specific object is positioned within the angle of view of the second virtual camera. Alternatively, the determination section 112 determines whether or not a vector that connects the position of the second virtual camera and a representative point of a specific portion is positioned within the angle of view of the second virtual camera.

The determination section 112 may calculate the inner product of a vector that connects the position of the second virtual camera and a representative point of a specific object and a normal vector set corresponding to the representative point of the specific object to determine whether or not the representative point of the specific object is viewed from the second virtual camera. Alternatively, the determination section 112 may calculate the inner product of a vector that connects the position of the second virtual camera and a representative point of a specific portion and a normal vector set corresponding to the representative point of the specific portion to determine whether or not the representative point of the specific portion is viewed from the second virtual camera.

The communication control section 114 generates a packet transmitted to another game apparatus 10, designates the network address of the packet transmission destination game apparatus 10, stores a received packet in the storage section 50, analyzes a received packet, and controls the communication section 60 relating to packet transmission/reception, for example. In this embodiment, the communication control section 114 generates a data packet and a command packet necessary for executing the breeding game through a network (e.g., Internet), and causes the communication section 60 to transmit and receive the data packet and the command packet.

The drawing section 120 performs a drawing process based on the results of various processes (game process) performed by the processing section 100 to generate images, and outputs the images to the first display section 18 and the second display section 34. When generating a three-dimensional game image, the drawing section 120 receives display object data (object data or model data) including vertex data (e.g., vertex position coordinates, texture coordinates, color data, normal vector, or alpha value) relating to each vertex that defines the display object (object or model), and performs a vertex process based on the vertex data included in the display object data. When performing the vertex process, the drawing section 120 may perform a vertex generation process (tessellation, curved surface division, or polygon division) for dividing the polygon, if necessary. In the vertex process, the drawing section 120 performs a vertex movement process and a geometric process such as coordinate transformation (world coordinate transformation or camera coordinate transformation), clipping, perspective transformation, or a light source process, and changes (updates or adjusts) the vertex data relating to the vertices that form the display object based on the processing results. The drawing section 120 performs rasterization (scan conversion) based on the vertex data after the vertex process so that the surface of the polygon (primitive) is associated with pixels. The drawing section 120 then performs a pixel process (fragment process) that draws pixels that form the image (fragments that form the display screen). In the pixel process, the drawing section 120 determines the drawing color of each pixel that forms the image by performing various processes such as texture reading (texture mapping), color data setting/change, translucent blending, and anti-aliasing, and outputs (draws) the drawing color of the object subjected to perspective transformation to a drawing buffer (VRAM or rendering target) that can store image information corresponding to each pixel. Specifically, the pixel process includes a per-pixel process that sets or changes the image information (e.g., color, normal, luminance, and alpha value) corresponding to each pixel.

The drawing section 120 according to this embodiment performs the vertex process based on the position, the direction, and the angle of view of the first virtual camera, and draws an image viewed from the first virtual camera in the first drawing buffer 52 (i.e., first drawing area) while performing the vertex process based on the position, the direction, and the angle of view of the second virtual camera and drawing an image viewed from the second virtual camera in the second drawing buffer 53 (i.e., second drawing area).

The vertex process and the pixel process performed by the drawing section 120 may be implemented by hardware that enables a programmable polygon (primitive) drawing process (i.e., programmable shader (vertex shader and pixel shader)) based on a shader program written using a shading language. The programmable shader enables a programmable per-vertex process and per-pixel process to increase the degree of freedom relating to the drawing process so that the representation capability is significantly improved as compared with a fixed hardware drawing process.

The drawing section 120 performs a geometric process, a texture mapping process, a hidden surface removal process, an alpha blending process, and the like when drawing the display object.

In the geometric process, the drawing section 120 performs a coordinate transformation process, a clipping process, a perspective transformation process, a light source calculation process, and the like on the display object. The display object data (e.g., display object's vertex position coordinates, texture coordinates, color data (luminance data), normal vector, or alpha value) after the geometric process (after perspective transformation) is stored in the main storage section 51.

The term "texture mapping process" refers to a process that maps a texture (texel values) stored in the storage section 50 on the display object. Specifically, the drawing section 120 reads a texture (surface properties such as color (RGB) and alpha value) from the storage section 50 using the texture coordinates set (assigned) corresponding to the vertices of the display object, for example. The drawing section 120 then maps the texture (i.e., two-dimensional image) on the display object. In this case, the drawing section 120 performs a pixel-texel association process, a bilinear interpolation process (texel interpolation process), and the like.

The drawing section 120 may perform a hidden surface removal process by a Z buffer method (depth comparison method or Z test) using a Z buffer (depth buffer) that stores the Z value (depth information) of the drawing pixel. Specifically, the drawing section 120 refers to the Z value stored in the Z buffer when drawing the drawing pixel corresponding to the primitive of the object. The drawing section 120 compares the Z value stored in the Z buffer with the Z value of the drawing pixel of the primitive. When the Z value of the drawing pixel is the Z value in front of the virtual camera (e.g., a small Z value), the drawing section 120 draws the drawing pixel and updates the Z value stored in the Z buffer with a new Z value.

The term "alpha blending process" refers to a translucent blending process (e.g., normal alpha blending, additive alpha blending, or subtractive alpha blending) based on the alpha value (A value). In normal alpha blending, the drawing section 120 calculates a color obtained by blending two colors by performing a linear interpolation process using the alpha value as the degree of blending.

The term "alpha value" refers to information that can be stored corresponding to each pixel (texel or dot), such as additional information other than the color information that indicates the luminance of each RGB color component. The alpha value may be used as mask information, translucency (equivalent to transparency or opacity), bump information, or the like.

The sound generation section 130 performs a sound generation process based on the results of various processes performed by the processing section 100 to generate game sound such as background music (BGM), effect sound, or voice, and outputs the generated game sound to the sound output section 44. In this embodiment, a virtual sound source is set corresponding to each specific object, and sound data generated by each sound source is set corresponding to each sound source. When a sound generation event has occurred due to the operation information input by the player, a program, and the like, the sound generation section 130 generates sound output from the sound output section 44 based on the position of the virtual sound source set corresponding to the object and at least one of the position, the direction, and the angle of view of at least one of the first virtual camera and the second virtual camera.

Specifically, the sound generation section 130 determines the value and the ratio of the sound data from each sound source when synthesizing the sound data from each sound source based on a vector that connects the position of the virtual camera and the sound source and a normal vector set corresponding to the sound source based on the positional relationship between the virtual camera and the sound source, the relative directional relationship between the virtual camera and the sound source, the absence or presence of the sound source within the angle of view of the virtual camera, and the like. In this case, the sound generation section 130 may determine the ratio of the volume of the sound data from each sound source based on the ratio of the distance between the first virtual camera and the virtual sound source set corresponding to the specific object and the distance between the second virtual camera and the virtual sound source, for example.

The sound generation section 130 may set a first virtual microphone that collects sound at a position, direction, and angle of view corresponding to the first virtual camera and a second virtual microphone that collects sound at a position, direction, and angle of view corresponding to the second virtual camera, synthesize the sound data from each sound source corresponding to each virtual microphone, synthesize the sound data synthesized corresponding to each virtual microphone, and cause the sound output section 44 to output the resulting sound, for example.

The sound generation section 130 may determine the value and the ratio of the sound data from each sound source when synthesizing the sound data from each sound source based on the drawing ratio of the object for which the virtual sound source is set in the first drawing buffer 52 and the drawing ratio of the object in the first drawing buffer 52, and generate sound output from the sound output section. In this case, the sound generation section 130 may synthesize the sound data so that the volume of the sound data from the virtual sound source set corresponding to the specific object that is collected by the first virtual microphone is increased when a large specific object is drawn in the first drawing buffer 52, and the volume of the sound data from the virtual sound source set corresponding to the specific object that is collected by the second virtual microphone is decreased or set at zero when the specific object is not drawn in the second drawing buffer 53, for example.

The image generation apparatus according to this embodiment may be a apparatus dedicated to a single-player mode that allows only one player to play the game, or may be a apparatus that also allows a plurality of players to play the game in a multi-player mode. When a plurality of players play the game, a game image and game sound supplied to each player may be generated using one terminal, or may be generated by a distributed process using a plurality of terminals (game devices or portable telephones) connected through a network (transmission line or communication line), for example.

### 3. Method according to this embodiment

The method employed for the game apparatus 10 according to this embodiment is described in detail below. The game apparatus 10 according to this embodiment sets the first virtual camera and the second virtual camera in the object space, and controls the first virtual camera and the second virtual camera in synchronization based on various combinations. Therefore, the game apparatus 10 according to this embodiment can display an image of the object space viewed from the first virtual camera and an image of the object space viewed from the second virtual camera in synchronization based on various combinations.

### 3-1. Synchronous control based on character position information

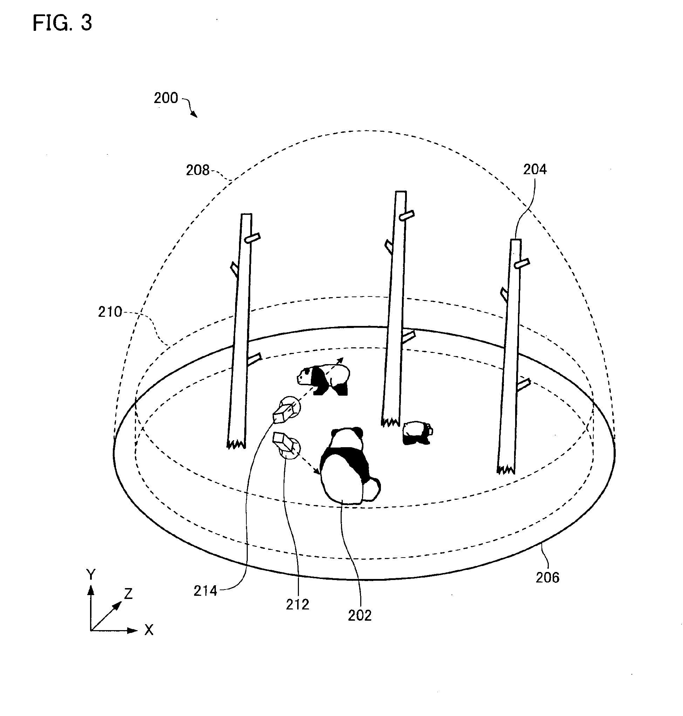

FIG. 3 shows an example of a three-dimensional object space 200 set by the game apparatus 10 according to this embodiment. In FIG. 3, an axis that extends along the horizontal direction is referred to as an X axis, an axis that extends along the vertical direction is referred to as a Y axis, and an axis that extends obliquely along the depth direction is referred to as a Z axis. As shown in FIG. 3, the game apparatus 10 sets various objects such as a plurality of characters 202, a tree object 204, and a ground object 206 in the object space 200 having a specific range. The game apparatus 10 sets a hemispherical celestial sphere object 208 in the object space 200 so as to cover the ground object 206, and maps a sky texture on the inner side of the celestial sphere object 208.

The game apparatus 10 sets a cylindrical background object 210 in the object space 200 so as to enclose the ground object 206 inside the celestial sphere object 208, and maps a background texture (e.g., trees and mountains) on the inner side of the background object 210. The game apparatus 10 sets a virtual camera inside the background object 210, and draws an image of the object space 200 viewed from the virtual camera so that the object space 200 having a specific range is displayed as a space larger than the actual range.

As shown in FIG. 3, the game apparatus 10 sets a first virtual camera 212 in the object space 200 at a height of about 1.6 m ("m" refers to a virtual length unit in the object space 200) from the ground object 206 corresponding to the height of a human. The game apparatus 10 sets the gaze point of the first virtual camera 212 corresponding to one of the characters 202, and controls the position and the direction of the first virtual camera 212 so that the first virtual camera 212 aims at the gaze point at a distance of about 1.0 m from the character 202 corresponding to the gaze point.

The movement/motion of each character 202 is controlled so that each character 202 automatically moves on the ground object 206 based on a movement/motion algorithm or the like. Each character 202 has a height of about 0.6 to 1.0 m. The gaze point is set at a position near the center of each character 202. Therefore, an image of the character 202 viewed from a height of about 1.6 m above the ground object 206 at an angle of about 45° with respect to the horizontal direction is displayed on the first display section 18 that displays an image viewed from the first virtual camera 212, as shown in FIG. 1.

The movement/motion of each character 202 is normally controlled on the ground object 206. However, when a predetermined condition has been satisfied, the movement/motion of a given character 202 is controlled so that the character 202 climbs up the tree object 204 shown in FIG. 3. In this case, when the position of the first virtual camera 212 is moved together with the character 202 that climbs up the tree object 204 and the first virtual camera 212 is turned downward from above the character 202 that climbs up the tree object 204, an image that shows that the background texture is mapped on the background object 210 is displayed. Such a situation may be prevented by continuously setting the gaze point of the first virtual camera 212 corresponding to the character 202 that climbs up the tree object 204 without changing the height of the first virtual camera 212. In this case, since the first virtual camera 212 faces upward, other characters 202 positioned on the ground object 206 are not displayed.

Therefore, as shown in FIG. 3, the game apparatus 10 sets a second virtual camera 214 in the object space 200 at a position above the first virtual camera 212, and sets a limitation range that limits a value indicated by the first control information that controls the first virtual camera 212. The game apparatus 10 calculates the first control information so that the first control information has a value within the limitation range, and calculates the second control information that controls the second virtual camera 214 based on the first control information so that the second control information has a value outside the limitation range of the first control information.

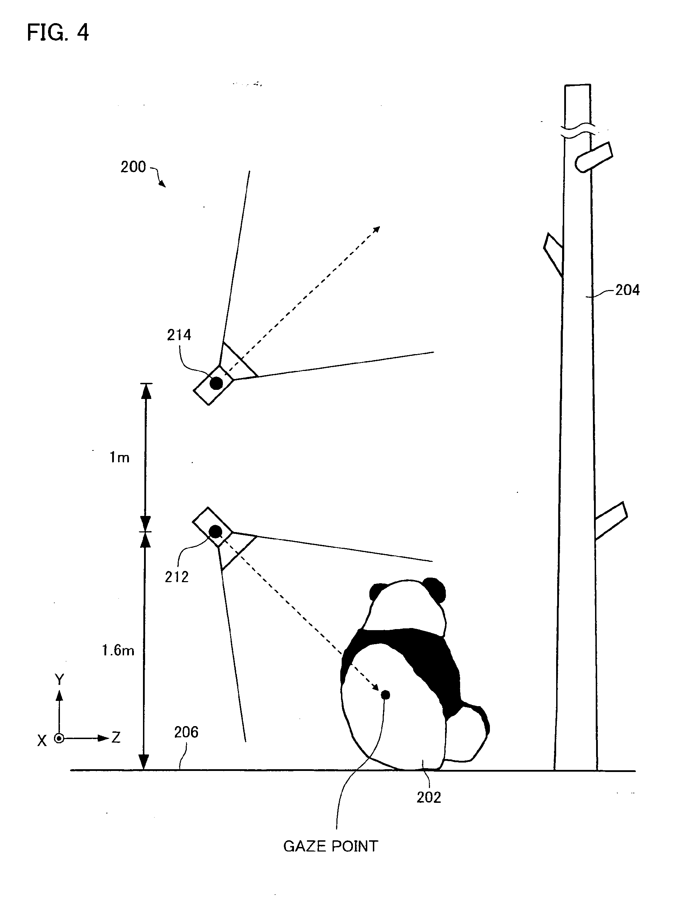

FIG. 4 illustrates an example of the relationship between the first control information and the second control information. In FIG. 4, an axis that extends along the depth direction is referred to as an X axis, an axis that extends along the vertical direction is referred to as a Y axis, and an axis that extends along the horizontal direction is referred to as a Z axis. As shown in FIG 4, the game apparatus 10 sets the second virtual camera 214 at a height of 1 m above the first virtual camera 212 (2.6 m above the ground object 206), and controls the direction of the second virtual camera 214 so that the second virtual camera 214 faces upward at an angle of 90° with respect to the direction of the first virtual camera 212. Therefore, as shown in FIG. 1, an image of the object space 200 viewed from a height of about 2.6 m above the ground object 206 at an angle of about 45° with respect to the horizontal direction is displayed on the second display section 34 that displays an image viewed from the second virtual camera 214.

When the character 202 corresponding to the gaze point has moved, the game apparatus 10 calculates the first control information that controls the first virtual camera 212 based on the coordinates of the position of the gaze point after the character 202 has moved so that the first virtual camera 212 follows the movement of the character 202. The game apparatus 10 then converts the calculated first control information to calculate the second control information that controls the second virtual camera 214. Specifically, the game apparatus 10 calculates position information (i.e., an element of the second control information) of the second virtual camera 214 by adding a coordinate value alpha corresponding to 1.0 m to a Y coordinate value (i.e., height) included in the position information (element of the first control information) of the first virtual camera 212, and calculates the direction (element of the second control information) of the second virtual camera 214 so that the second virtual camera 214 faces upward with respect to the first virtual camera 212 at an angle of 90° around the X axis. Specifically, the game apparatus 10 converts the first control information to the second control information to change the image viewed from the second virtual camera 214 in synchronization with a change in the image viewed from the first virtual camera 212.

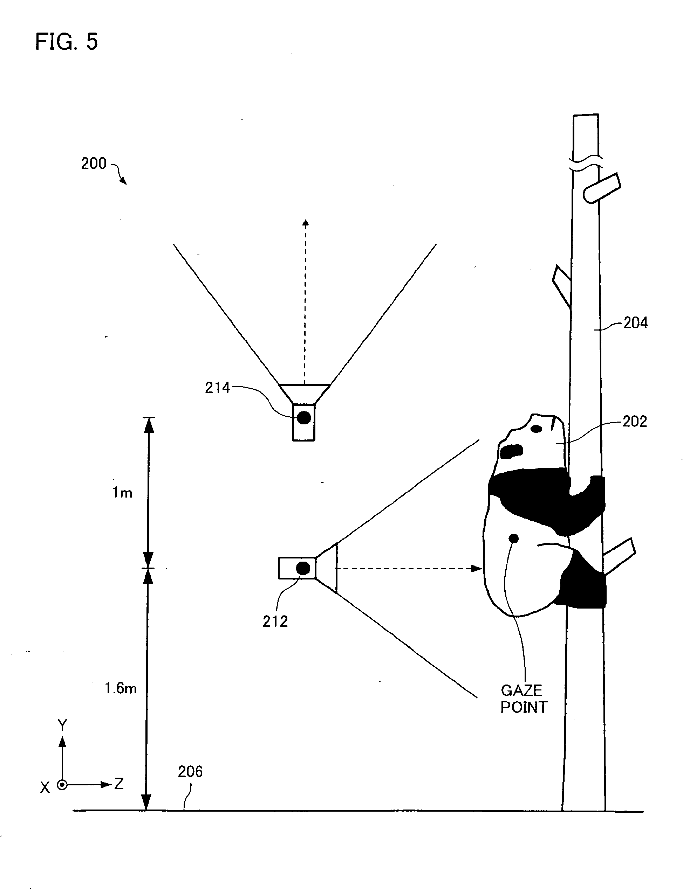

As shown in FIG 5, even when the character 202 corresponding to the gaze point of the first virtual camera 212 has climbed up the tree object 204 so that the character 202 has been located at a position higher than the position of the first virtual camera 212, the game apparatus 10 maintains the height of the first virtual camera 212 and prevents the first virtual camera 212 from facing upward with respect to the horizontal direction. Specifically, the game apparatus 10 controls the first virtual camera 212 and the second virtual camera 214 to limit the height and the upward direction of the first virtual camera 212 and cause the second virtual camera 214 to photograph the object space 200 outside the angle of view of the first virtual camera 212. Therefore, the game apparatus 10 can display an image that shows the character 202 that is climbing up the tree on the second display section 34 while displaying an image that shows other characters 202 on the ground object 206 on the first display section 18 so that an inappropriate image is not displayed.

### 3-2. Drawing in second drawing area

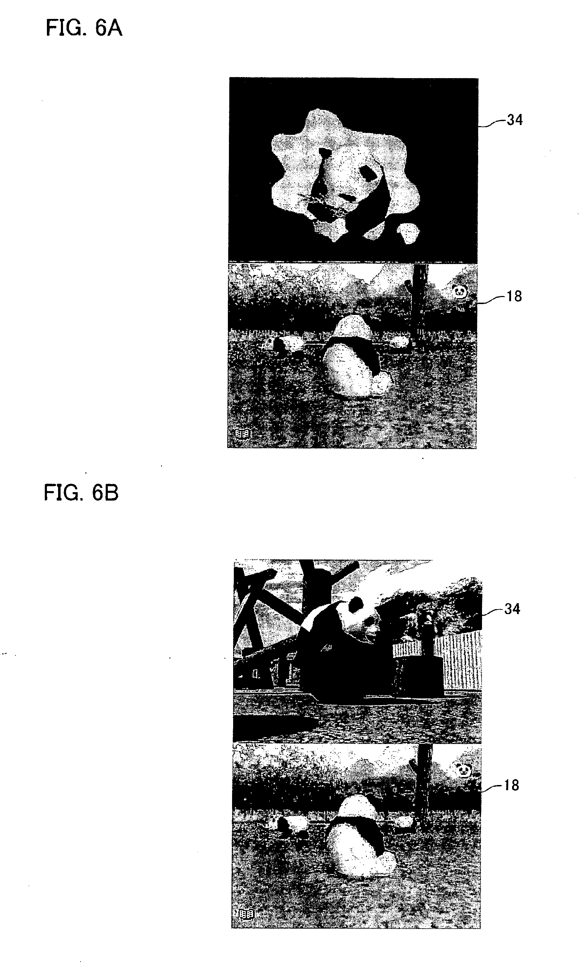

The game apparatus 10 controls the position and the direction of the first virtual camera 212 while setting the gaze point of the first virtual camera 212 at an arbitrary character 202. On the other hand, since the game apparatus 10 controls the position and the direction of the second virtual camera 214 in synchronization with a change in the position and the direction of the first virtual camera 212, a character 202 may not be positioned within the angle of view of the second virtual camera 214. As a result, as shown in FIG. 1, a character 202 may not be displayed on the second display section 34. Therefore, when the game apparatus 10 controls the first virtual camera 212 and the second virtual camera 214 in synchronization, the game apparatus 10 draws a special image in the second drawing area based on the image data that has been previously drawn and stored in the storage section to display the special image on the second display section 34, as shown in FIG. 6A, when a predetermined period of time has elapsed in a state in which a character 202 is not displayed on the second display section 34.

In this case, the game apparatus 10 utilizes image data that has been drawn in the first drawing area (drawing area of the first display section 18) or the second drawing area (drawing area of the second display section 34) during the game. Therefore, when a specific event (e.g., a character 202 has climbed up a tree) has occurred, the game apparatus 10 copies the image data drawn in the first drawing area or the second drawing area into the storage section. When a character 202 is positioned within the angle of view of the second virtual camera 214, the game apparatus 10 copies the image data drawn in the second drawing area into the storage section.

Therefore, the game apparatus 10 can display the previous state of the breeding target character 202 when a predetermined period of time has elapsed in a state in which no character 202 is displayed on the second display section 34, by displaying an image that has been drawn during the game on the second display section 34. When an event in which a character 202 climbs up a tree has occurred when the special image is displayed on the second display section 34, the game apparatus 10 resumes the process of drawing an image viewed from the second virtual camera 214 on the second drawing area to display the image viewed from the second virtual camera 214 on the second display section 34.

When no image data has been drawn during the game, the game apparatus 10 suspends controlling the first virtual camera 212 and the second virtual camera 214 in synchronization when a predetermined period of time has elapsed in a state in which no character 202 is displayed on the second display section 34, and calculates the second control information without using the first control information. For example, when a predetermined period of time has elapsed in a state in which no character 202 is displayed on the second display section 34, the game apparatus 10 sets a gaze point of the second virtual camera 214 to a character 202 to which a gaze point of the first virtual camera 212 has been set, or sets a gaze point of the second virtual camera 214 to another character 202 to which a gaze point of the first virtual camera 212 has not been set, as shown in FIG. 6B. The game apparatus 10 then calculates the second control information that controls the second virtual camera 214 based on the position coordinates of the gaze point that has been moved so that the second virtual camera 214 follows the movement of the character 202. The game apparatus 10 may control the second virtual camera 214 by setting the gaze point of the second virtual camera 214 at an object corresponding to a given event when the given event has occurred. Alternatively, the game apparatus 10 may control the second virtual camera 214 using predetermined control information corresponding to an event that has occurred.

### 3-3. Synchronous control based on operation information

The game apparatus 10 according to this embodiment stores object data of an object space 200 (i.e., relatively large object space 200) that is relatively larger than the above-mentioned object space 200 (i.e., relatively small object space 200) in the information storage medium. The game apparatus 10 reads the object data of the relatively large object space 200 from the information storage medium based on the operation information input by the player, a program, and the like, and changes the object space 200 in which the first virtual camera 212 and the second virtual camera 214 are set from the relatively small object space 200 to the relatively large object space 200.

The movement/motion of the characters 202 is controlled so that the characters 202 automatically move on the ground object 206 based on a movement/motion algorithm and the like even in the relatively large object space 200. On the other hand, the first virtual camera 212 and the second virtual camera 214 are set in the relatively large object space 200 irrespective of the position of each character 202. Therefore, when the object space 200 in which the first virtual camera 212 and the second virtual camera 214 are set has been changed from the relatively small object space 200 to the relatively large object space 200, no character 202 may be positioned within the angle of view of each of the first virtual camera 212 and the second virtual camera 214. In this case, the game apparatus 10 controls the position, the direction, and the angle of view of each of the first virtual camera 212 and the second virtual camera 214 based on the operation information input by the player so that the player can search for the characters 202.

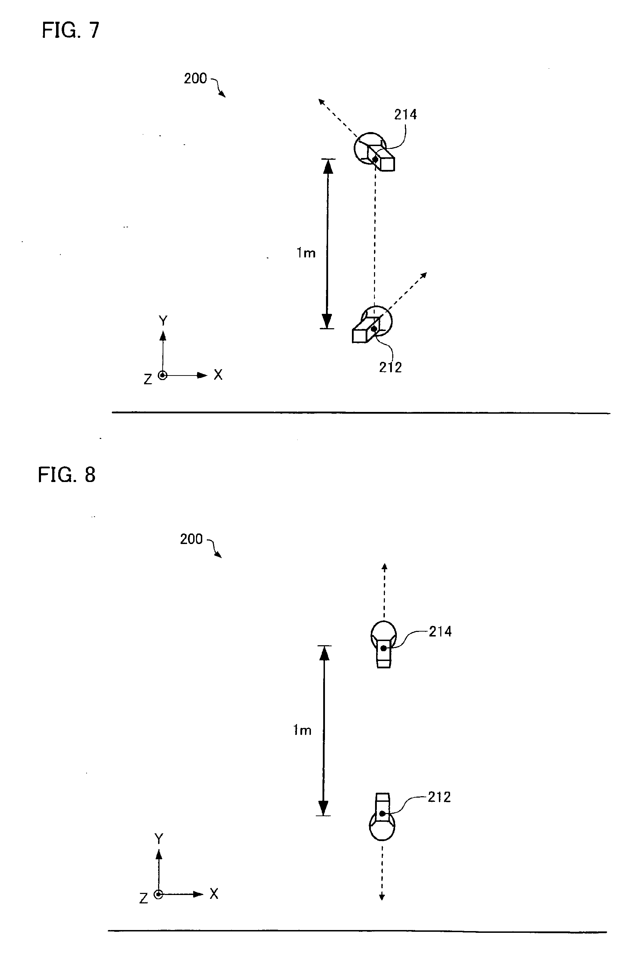

FIG. 7 illustrates an example of the relationship between the first control information and the second control information in this case. In FIG 7, an axis that extends along the horizontal direction is referred to as an X axis, an axis that extends along the vertical direction is referred to as a Y axis, and an axis that extends along the depth direction is referred to as a Z axis. As shown in FIG. 7, the game apparatus 10 sets the second virtual camera 214 at a height of 1 m above the first virtual camera 212. When the player has performed a rightward direction designation operation using the arrow key 20 shown in FIG 1, for example, the game apparatus 10 calculates the first control information so that the first virtual camera 212 turns to the right, as shown in FIG. 7. The game apparatus 10 then converts the calculated first control information to calculate the second control information so that the second virtual camera 214 turns to the left. When the player has performed a downward direction designation operation using the arrow key 20, the game apparatus 10 calculates the first control information so that the first virtual camera 212 faces downward, as shown in FIG. 8. The game apparatus 10 then converts the calculated first control information to calculate the second control information so that the second virtual camera 214 faces upward.

Specifically, when the game apparatus 10 has calculated the first control information based on the operation information input by the player, the game apparatus 10 converts the first control information to the second control information so that the first virtual camera 212 and the second virtual camera 214 face in different directions based on the direction (i.e., reference direction) in which the direction of the first virtual camera 212 is parallel to the direction of the second virtual camera 214 (i.e., direction conversion process). The game apparatus 10 thus changes the image viewed from the second virtual camera 214 in synchronization with a change in the image viewed from the first virtual camera 212.

Specifically, since the game apparatus 10 sets the directions of the first virtual camera 212 and the second virtual camera 214 based on the coordinates of the position of the gaze point, the game apparatus 10 changes the directions of the first virtual camera 212 and the second virtual camera 214 by changing the coordinates of the position of the gaze point based on the operation information. When the game apparatus 10 has changed the coordinates of the position of the gaze point of the first virtual camera 212 based on the operation information, the game apparatus 10 subtracts the amount of change in each coordinate value from the coordinates of the position of the gaze point in the reference direction of the first virtual camera 212, from the coordinates of the position of the gaze point of the second virtual camera 214 in the reference direction, to calculate the coordinates of the position of the gaze point of the second virtual camera 214. For example, when the amount of change in the coordinates of the position of the gaze point of the first virtual camera 212 is indicated by (5, -4, -2), the game apparatus 10 subtracts (5, -4, -2) from the coordinates of the position of the gaze point of the second virtual camera 214 in the reference direction to calculate the coordinates of the position of the gaze point of the second virtual camera 214.

The game apparatus 10 changes the direction of the second virtual camera 214 with respect to the direction of the first virtual camera 212 when the player performs a direction instruction operation using the arrow key 20, and changes the direction of the second virtual camera 214 so that the direction of the second virtual camera 214 is parallel to the direction of the first virtual camera 212 that has been changed when the player has finished the direction instruction operation using the arrow key 20. The game apparatus 10 may return the direction of the first virtual camera 212 and the direction of the second virtual camera 214 to the reference direction when the player has finished the direction instruction operation using the arrow key 20.

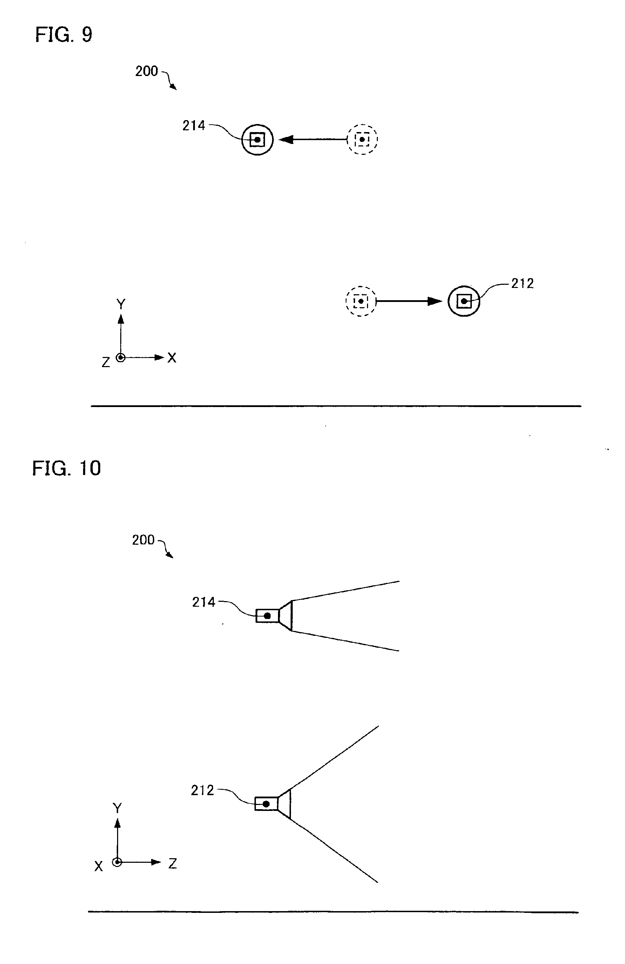

When the player has performed a contact operation that designates a right position with respect to the center of the first display section 18 shown in FIG. 1, the game apparatus 10 calculates the first control information so that the first virtual camera 212 moves in the rightward direction, as shown in FIG. 9. The game apparatus 10 then converts the calculated first control information to calculate the second control information so that the second virtual camera 214 moves in the leftward direction.

When the player has pressed the third button 26 shown in FIG. 1, the game apparatus 10 calculates the first control information so that the first virtual camera 212 moves in the forward direction. The game apparatus 10 then converts the calculated first control information to calculate the second control information so that the second virtual camera 214 moves in the backward direction.

Specifically, when the game apparatus 10 has calculated the first control information based on the operation information input by the player, the game apparatus 10 converts the first control information to the second control information so that the first virtual camera 212 and the second virtual camera 214 move in different directions based on the position (i.e., reference position) at which the second virtual camera 214 is positioned right above the first virtual camera 212 (i.e., a state in which the X-coordinate value is identical with the Z coordinate value) (i.e., position conversion process). The game apparatus 10 thus changes the image viewed from the second virtual camera 214 in synchronization with a change in the image viewed from the first virtual camera 212.

Specifically, when the game apparatus 10 has changed the coordinates of the position of the first virtual camera 212 based on the operation information, the game apparatus 10 calculates the coordinates of the position of the second virtual camera 214 by subtracting the amount of change in each coordinate value from the coordinates of the reference position of the first virtual camera 212, from the coordinates of the reference position of the second virtual camera 214. For example, when the amount of change in the coordinates of the position of the first virtual camera 212 is indicated by (5, -4, -2), the game apparatus 10 subtracts (5, -4, -2) from the coordinates of the reference position of the second virtual camera 214 to calculate the coordinates of the position of the second virtual camera 214.

The game apparatus 10 changes the position of the second virtual camera 214 with respect to the position of the first virtual camera 212 when the player performs a position instruction contact operation using the first display section 18, and changes the position of the second virtual camera 214 so that the second virtual camera 214 is positioned right above the first virtual camera 212 when the player has finished the position instruction contact operation using the first display section 18. The game apparatus 10 may return the position of the first virtual camera 212 and the position of the second virtual camera 214 to the reference position when the player has finished the position instruction contact operation using the first display section 18.

When the player has pressed the first button 22 shown in FIG 1, the game apparatus 10 calculates the first control information so that the angle of view of the first virtual camera 212 increases, as shown in FIG. 10. The game apparatus 10 then converts the calculated first control information to calculate the second control information so that the angle of view of the second virtual camera 214 decreases. When the player has pressed the second button 24, the game apparatus 10 calculates the first control information so that the angle of view of the first virtual camera 212 decreases. The game apparatus 10 then converts the calculated first control information to calculate the second control information so that the angle of view of the second virtual camera 214 increases.

Specifically, when the game apparatus 10 has calculated the first control information based on the operation information input by the player, the game apparatus 10 converts the first control information to the second control information so that the ratio of the angle of view of the first virtual camera 212 to the angle of view of the second virtual camera 214 changes based on a state in which the angle of view of the first virtual camera 212 and the angle of view of the second virtual camera 214 are 45° (i.e., reference angle of view) (i.e., angle-of-view conversion process). The game apparatus 10 thus changes the image viewed from the second virtual camera 214 in synchronization with a change in the image viewed from the first virtual camera 212.

Specifically, when the game apparatus 10 has changed the angle of view of the first virtual camera 212 based on the operation information, the game apparatus 10 calculates the second control information by subtracting the amount of change in the angle of view of the first virtual camera 212 from the reference angle of view from the angle of view of the first virtual camera 212. For example, when the amount of change in the angle of view of the first virtual camera 212 is 5°, the game apparatus 10 subtracts 5° from the reference angle of view of the second virtual camera 214 to calculate the angle of view of the second virtual camera 214.

The game apparatus 10 changes the ratio of the angle of view of the first virtual camera 212 to the angle of view of the second virtual camera 214 when the player presses the first button 22 or the second button 24, and returns the angle of view of the first virtual camera 212 and the angle of view of the second virtual camera 214 to the reference angle of view when the player has released the first button 22 or the second button 24.

When the player has performed a contact operation that designates the display position of the character 202 using the first display section 18 in a state in which the character 202 is displayed on the first display section 18 by causing the character 202 to be positioned within the angle of view of the first virtual camera 212, the game apparatus 10 sets the gaze point of the first virtual camera 212 at the character 202 for which the player has performed the contact operation. The game apparatus 10 then controls the first virtual camera 212 and the second virtual camera 214 in synchronization based on the above-mentioned position information of the character 202.

### 3-4. Synchronous control based on occurrence of event

In the game apparatus 10 according to this embodiment, an event in which the character 202 climbs up the tree object 204 also occurs in the relatively large object space 200. The probability that an inappropriate image is displayed by causing the second virtual camera 214 to face downward from above the character 202 that climbs up the tree object 204 is reduced in the relatively large object space 200 as compared with the relatively narrow object space 200. Therefore, when the first virtual camera 212 and the second virtual camera 214 are set in the relatively large object space 200, the game apparatus 10 controls the positions and the directions of the first virtual camera 212 and the second virtual camera 214 so that the first virtual camera 212 faces the character 202 from a position under the character 202 and the second virtual camera 214 faces the character 202 from a position above the character 202 when an event in which the character 202 climbs up the tree object 204 has occurred.

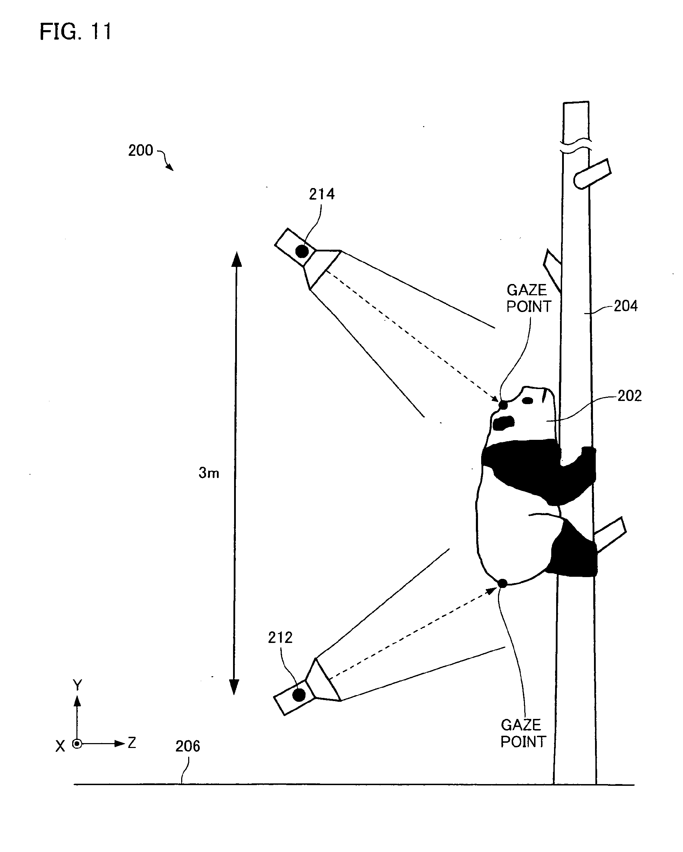

Specifically, the game apparatus 10 sets the second virtual camera 214 at a height of 1 m above the position of the first virtual camera 212 and controls the direction of the second virtual camera 214 so that the second virtual camera 214 faces upward at an angle of 90° with respect to the direction of the first virtual camera 212, as shown in FIG. 4, in the relatively large object space 200 until an event in which the character 202 climbs up the tree object 204 occurs. When an event in which the character 202 climbs up the tree object 204 has occurred in the relatively large object space 200, the game apparatus 10 changes the distance between the position of the first virtual camera 212 and the position of the second virtual camera 214 from 1 m to 3 m, as shown in FIG 11 (i.e., position change process).

The game apparatus 10 then sets the gaze point of the first virtual camera 212 and the gaze point of the second virtual camera 214 at an identical character 202 (i.e., direction change process). The game apparatus 10 sets the gaze point of the first virtual camera 212 at the buttocks of the character 202, and sets the gaze point of the second virtual camera 214 at the head of the character 202, as shown in FIG 11.

The game apparatus 10 reduces the angle of view of the first virtual camera 212 and the angle of view of the second virtual camera 214 as compared with those before the event in which the character 202 climbs up the tree object 204 occurs (i.e., angle-of-view change process). A situation in which the background object 210 is positioned within the angle of view of the second virtual camera 214 can be prevented by reducing the angle of view of the second virtual camera 214 even when causing the second virtual camera 214 to face the character 202 that climbs up the tree object 204 from a position above the character 202. Therefore, a situation in which an inappropriate image is displayed can be prevented.

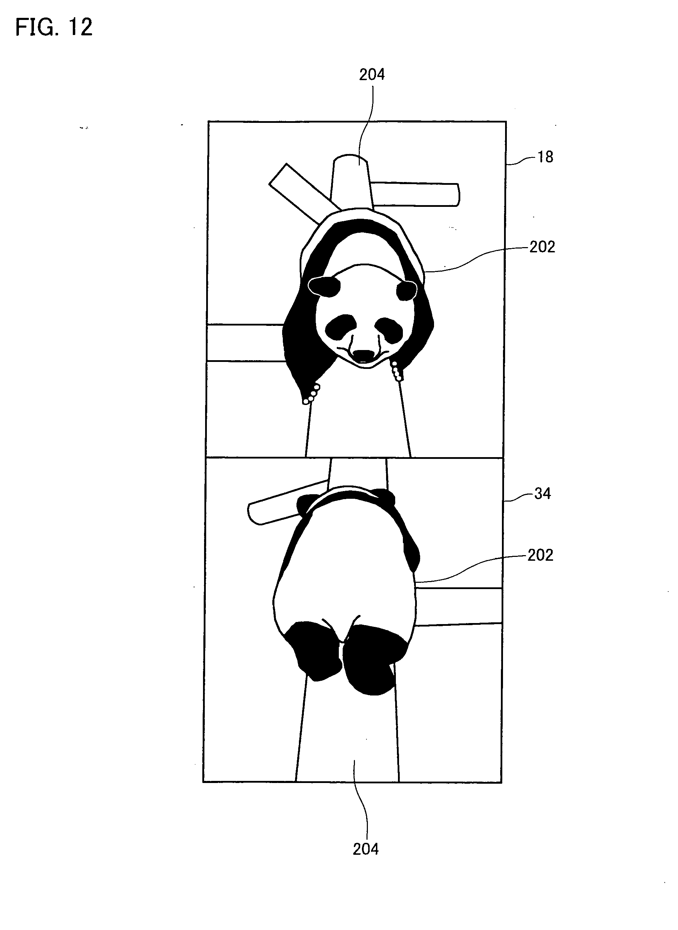

When the position of the character 202 has changed, the game apparatus 10 calculates the first control information and the second control information so that the first virtual camera 212 faces the gaze point of the first virtual camera 212 and the second virtual camera 214 faces the gaze point of the second virtual camera 214, while maintaining the relationship between the position of the first virtual camera 212 and the position of the second virtual camera 214 in a state in which the second virtual camera 214 is positioned right above the first virtual camera 212 at a distance of 3 m from the first virtual camera 212 (i.e., direction change process). Therefore, as shown in FIG 12, an image that aims at the buttocks of the character 202 from a position under the character 202 while following the character 202 that climbs up the tree object 204 is displayed on the first display section 18 that displays an image viewed from the first virtual camera 212, and an image that aims at the head of the character 202 from a position above the character 202 while following the character 202 that climbs up the tree object 204 is displayed on the second display section 34 that displays an image viewed from the second virtual camera 214.

When the game apparatus 10 sets the gaze point of the first virtual camera 212 at the buttocks of the character 202 and sets the gaze point of the second virtual camera 214 at the head of the character 202, the game apparatus 10 sets a first sound source for the buttocks of the character 202 at the gaze point of the first virtual camera 212, and sets a second sound source for the head of the character 202 at the gaze point of the second virtual camera 214. When an event in which sound is generated from the first sound source has occurred due to the operation information input by the player, the program, and the like, the game apparatus 10 generates sound output from the sound output section 44 based on the position of the first sound source and at least one of the position, the direction, and the angle of view of the first virtual camera. When an event in which sound is generated from the second sound source has occurred due to the operation information input by the player, the program, and the like, the game apparatus 10 generates sound output from the sound output section 44 based on the position of the second sound source and at least one of the position, the direction, and the angle of view of the second virtual camera. The game apparatus 10 thus changes the output sound in synchronization with a change in the image displayed on the first display section 18 and the image displayed on the second display section 34.

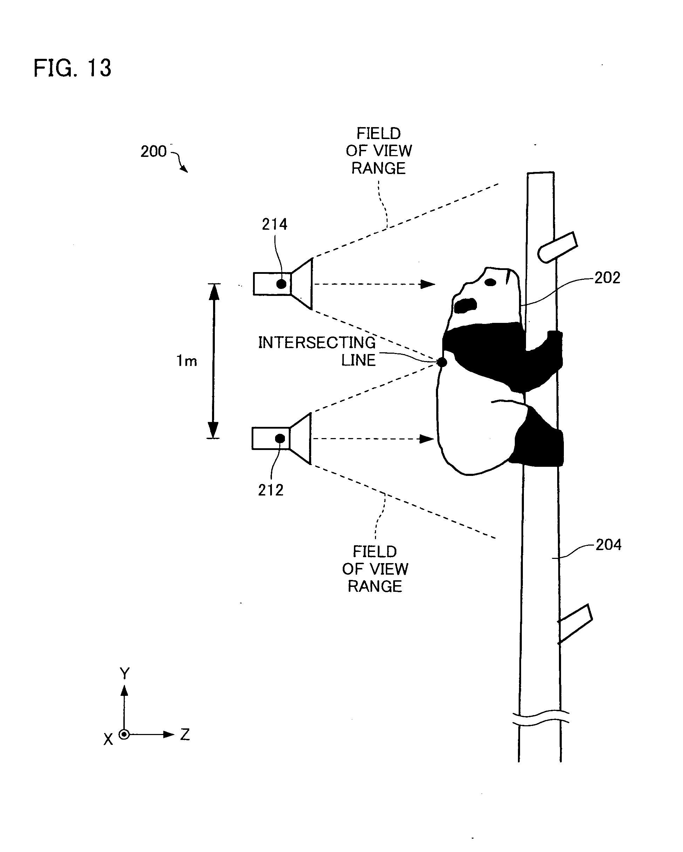

In the game apparatus 10, when the character 202 has reached the upper end of the tree object 204, an inappropriate image may be displayed even in the relatively large object space 200 when the second virtual camera 214 faces downward from a position above the character 202 that has reached the upper end of the tree object 204. Therefore, when a special event in which the character 202 has reached the upper end of the tree object 204 has occurred, the game apparatus 10 changes the distance between the position of the first virtual camera 212 and the position of the second virtual camera 214 from 3 m to 1 m, as shown in FIG. 13 (i.e., position change process). The game apparatus 10 then changes the direction of the first virtual camera 212 and the direction of the second virtual camera 214 to the horizontal direction (i.e., direction change process). The game apparatus 10 changes the angle of view of the first virtual camera 212 and the angle of view of the second virtual camera 214 so that an intersecting line between an upper side surface of a truncated pyramidal field of view range defined by the first virtual camera 212 and a lower side surface of a truncated pyramidal field of view range defined by the second virtual camera 214 corresponds to the position of the character 202 (i.e., angle-of-view change process). Therefore, the game apparatus 10 can prevent a situation in which an inappropriate image is displayed, and can draw the character 202 so that the portions of the character 202 partially drawn on the first display section 18 and the second display section 34 are connected when the image displayed on the first display section 18 is adjacent to the image displayed on the second display section 34.

### 4. Flow of process according to this embodiment

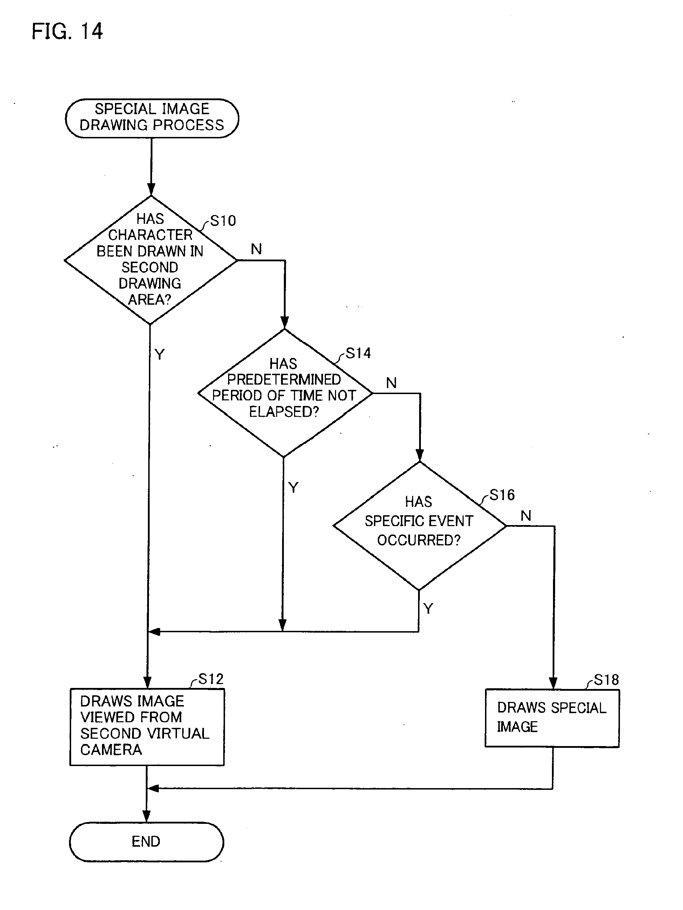

FIG. 14 is a flowchart showing the details of a special image drawing process performed by the game apparatus 10 according to this embodiment when drawing the special image. In the special image drawing process shown in FIG 14, the game apparatus 10 determines whether or not the character 202 has been drawn in the second drawing area in the drawing process in the preceding frame (step S10). When the game apparatus 10 has determined that the character 202 has been drawn in the second drawing area in the drawing process in the preceding frame (Y in step S10), the game apparatus 10 draws an image viewed from the second virtual camera 214 (step S12). When the game apparatus 10 has determined that the character 202 has not been drawn in the second drawing area in the drawing process in the preceding frame (N in step S10), the game apparatus 10 determines whether or not a predetermined period of time has not elapsed in a state in which the character 202 is not drawn in the second drawing area (step S14). When the game apparatus 10 has determined that the predetermined period of time has not elapsed in a state in which the character 202 is not drawn in the second drawing area (Y in step S14), the game apparatus 10 draws an image viewed from the second virtual camera 214 (step S12). When the game apparatus 10 has determined that the predetermined period of time has elapsed in a state in which the character 202 is not drawn in the second drawing area (N in step S 14), the game apparatus 10 determines whether or not a specific event has occurred (step S16). When the game apparatus 10 has determined that the specific event has occurred (Y in step S16), the game apparatus 10 draws an image viewed from the second virtual camera 214 (step S12). When the game apparatus 10 has determined that the specific event has not occurred (N in step S16), the game apparatus 10 draws the special image in the second drawing area based on the image data that has been drawn and stored in the storage section (step S 18).

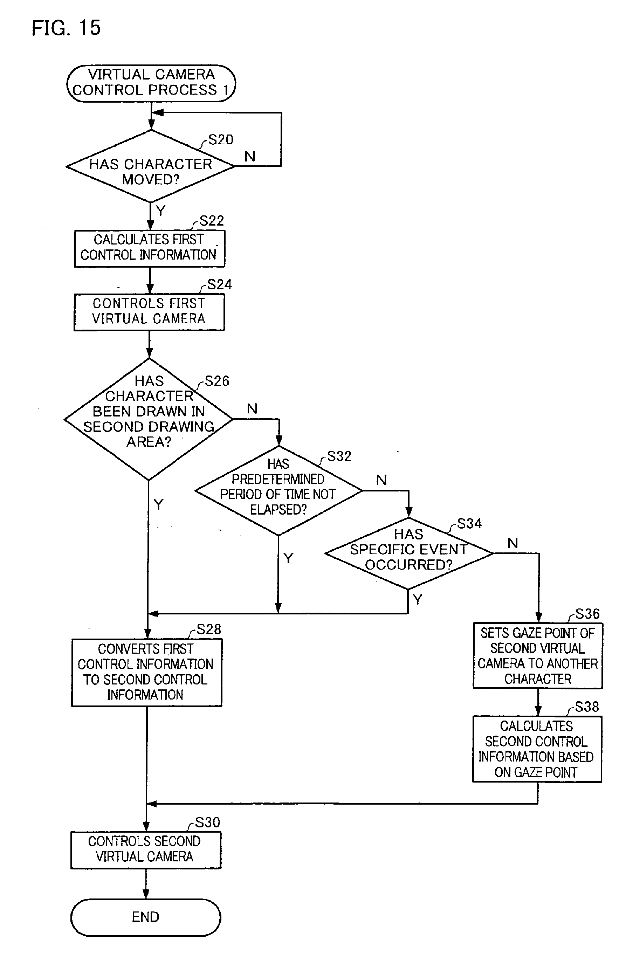

FIG. 15 is a flowchart showing the details of a virtual camera control process 1 performed by the game apparatus 10 according to this embodiment when image data for the special image has not been stored. In the virtual camera control process 1 shown in FIG. 15, when the gaze point has moved due to the movement of the character 202 (Y in step S20), the game apparatus 10 calculates the first control information based on the gaze point position information (step S22). The game apparatus 10 controls the first virtual camera 212 using the first control information (step S24). When the character 202 has been drawn in the second drawing area in the drawing process in the preceding frame (Y in step S26), the game apparatus 10 converts the first control information to the second control information (step S28). The game apparatus 10 controls the second virtual camera 214 using the second control information (step S30).

When the character 202 has not been drawn in the second drawing area in the drawing process in the preceding frame (N in step S26), the game apparatus 10 determines whether or not a predetermined period of time has not elapsed in a state in which the character 202 is not drawn in the second drawing area (step S32). When the game apparatus 10 has determined that the predetermined period of time has not elapsed in a state in which the character 202 is not drawn in the second drawing area (Y in step S32), the game apparatus 10 converts the first control information to the second control information (step S28). When the game apparatus 10 has determined that the predetermined period of time has elapsed in a state in which the character 202 is not drawn in the second drawing area (N in step S32), the game apparatus 10 determines whether or not a specific event has occurred (step S34). When the game apparatus 10 has determined that the specific event has occurred (Y in step S34), the game apparatus 10 converts the first control information to the second control information (step S28).

When the game apparatus 10 has determined that the specific event has not occurred (N in step S34), the game apparatus 10 sets the gaze point of the second virtual camera 214 at another character 202 (step S36). The game apparatus 10 calculates the second control information based on the coordinates of the position of the gaze point (step S38), and controls the second virtual camera 214 using the second control information (step S30).

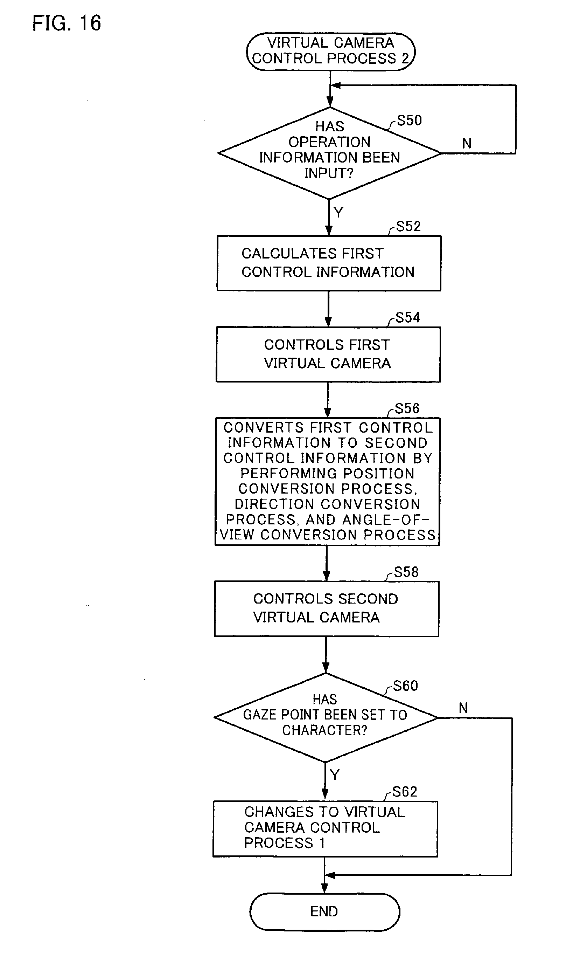

FIG. 16 is a flowchart showing the details of a virtual camera control process 2 performed by the game apparatus 10 according to this embodiment based on the operation information. In the virtual camera control process 2 shown in FIG. 16, when the operation information has been input (Y in step S50), the game apparatus 10 calculates the first control information based on the operation information (step S52). The game apparatus 10 controls the first virtual camera 212 using the first control information (step S54). The game apparatus 10 converts the first control information to the second control information by performing the above-described position conversion process, direction conversion process, and angle-of-view conversion process (step S56). The game apparatus 10 then controls the second virtual camera 214 using the second control information (step S58). When the player has performed a contact operation at the display position of the character 202 in a state in which the character 202 is drawn in the first drawing area so that the gaze point of the first virtual camera 212 has been set at the character 202 (Y in step S60), the game apparatus 10 changes the virtual camera control process to the virtual camera control process 1 (step S62).

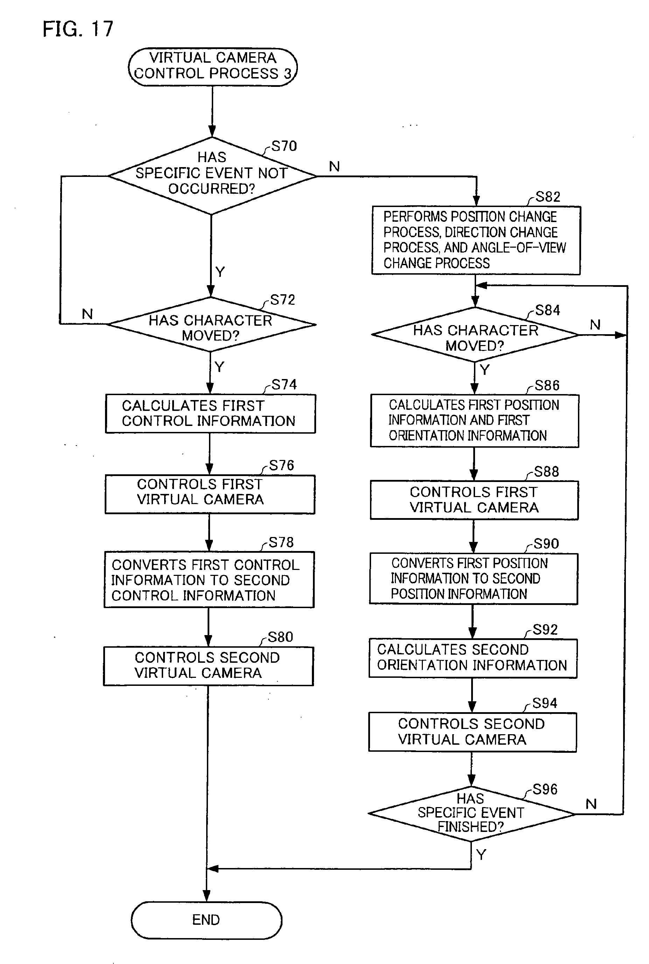

FIG. 17 is a flowchart showing the details of a virtual camera control process 3 performed by the game apparatus 10 according to this embodiment when the specific event has occurred. In the virtual camera control process 3 shown in FIG. 17, when the specific event has not occurred (Y in step S70) and the gaze point has moved due to the movement of the character 202 (Y in step S72), the game apparatus 10 calculates the first control information based on the gaze point position information (step S74). The game apparatus 10 controls the first virtual camera 212 using the first control information (step S76). The game apparatus 10 converts the first control information to the second control information (step S78), and controls the second virtual camera 214 using the second control information (step S80).

When the game apparatus 10 has determined that the specific event has occurred (N in step S70), the game apparatus 10 performs the above-described position change process, direction change process, and angle-of-view change process (step S82). When the gaze point has moved due to the movement of the character 202 (Y in step S84), the game apparatus 10 calculates the first position information and the first direction information (i.e., the elements of the first control information) based on the gaze point position information of the first virtual camera 212 (step S86). The game apparatus 10 controls the first virtual camera 212 using the first position information and first direction information (first control information) (step S88). The game apparatus 10 converts the first position information included in the first control information to the second position information (i.e., the element of the second control information) (step S90). The game apparatus 10 calculates the second direction information (i.e., the element of the second control information) based on the gaze point position information of the second virtual camera 214 that has moved due to the movement of the character 202 (step S92). The game apparatus 10 controls the second virtual camera 214 using the second position information and second direction information (second control information) (step S94). When the game apparatus 10 has determined that the specific event has finished (Y in step S96), the game apparatus 10 finishes the process. When the game apparatus 10 has determined that the specific event has not finished (N in step S96), the game apparatus 10 repeats the process from the step S84 to the step S96.

### 5. Modification

The methods described in the above embodiments are provided as examples, and other equivalent methods achieving effects similar to those of the above methods may also be included within the scope of the invention. The invention is not limited to the above embodiments, and various modifications can be made. The above methods and methods described below as modifications may be appropriately combined to be applied as a method for implementing the invention.

For example, the above embodiments have been described taking an example in which the first display section 18 also functions as the operation section 40. Note that the second display section 34 may also function as the operation section 40. The above embodiments have been described taking an example in which the first display section 18 is provided corresponding to the first drawing area and the second display section 34 is provided corresponding to the second drawing area. Note that the display area of one display section may be divided into a display area corresponding to the first drawing area and a display area corresponding to the second drawing area. The first drawing area and the second drawing area may be provided as individual storage devices, or may be provided as areas defined by dividing the memory area of one storage device.

The above embodiments have been described taking an example in which the image data that has been drawn during the game is used as the image data that has been drawn. Note that image data stored in the information storage medium when creating software for the game apparatus 10 may also be used, for example.

The invention may be applied to various image generation apparatuses such as an arcade game apparatus, a stationary consumer game apparatus, a large-scale attraction apparatus in which a number of players participate, a simulator, a multimedia terminal, a system board that generates a game image, and a portable telephone in addition to the portable game apparatus.

Although only some embodiments of this invention have been described in detail above, those skilled in the art will readily appreciate that many modifications are possible in the embodiments without materially departing from the novel teachings and advantages of this invention. Accordingly, all such modifications are intended to be included within the scope of the invention.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An image generation apparatus (10) comprising:
an object space setting section (106) that is adapted to set a plurality of objects (202, 204) in an object space (200);
a virtual camera control section (108) that is adapted to control at least one of a position, a direction, and an angle of view of a first virtual camera (212) by using first control information, calculate second control information based on the first control information, and control at least one of a position, a direction, and an angle of view of a second virtual camera (214) by using the second control information; and
a drawing section (120) that is adapted to draw an image of the object space (200) viewed from the first virtual camera (212) in a first drawing area (18), and draw an image of the object space (200) viewed from the second virtual camera (214) in a second drawing area (34) at the same time,
the virtual camera control section (108) setting a limitation range that limits a value indicated by at least one of position control information, direction control information, and angle-of-view control information included in the first control information, calculating the first control information within the limitation range, and calculating the second control information based on the first control information so that a value indicated by at least one of position control information, direction control information, and angle-of-view control information included in the second control information is obtained outside the limitation range.

2. The image generation apparatus (10) as defined in claim 1, further comprising:
a movement/motion control section (110) for controlling at least one of a movement and a motion of a specific object (202) among the plurality of objects (202, 204); and
a determination section (112) for determining whether or not the specific object (202) is positioned within the angle of view of the second virtual camera (214),
wherein the virtual camera control section (108) is adapted to calculate the first control information based on position information of the specific object (202); and
wherein the drawing section (120) is adapted to draw a special image in the second drawing area (34) based on image data that has been previously drawn and stored in a storage section (50) when the specific object (202) has been determined not to be positioned within the angle of view of the second virtual camera (214).

3. The image generation apparatus (10) as defined in claim 1 or 2, further comprising:
a movement/motion control section (110) for controlling at least one of a movement and a motion of a specific object (202) among the plurality of objects (202, 204); and
a determination section (112) for determining whether or not the specific object (202) is positioned within the angle of view of the second virtual camera (214),
wherein the virtual camera control section (108) is adapted to calculate the first control information based on position information of the specific object (202), and control at least one of the position, the direction, and the angle of view of the second virtual camera by using control information that is not based on the first control information when the specific object (202) has been determined not to be positioned within the angle of view of the second virtual camera (214).

4. An image generation apparatus (10) comprising:
an object space setting section (106) that is adapted to set a plurality of objects (202, 204) in an object space (200);
a virtual camera control section (108) that is adapted to control at least one of a position, a direction, and an angle of view of a first virtual camera (212) by using first control information, calculate second control information based on the first control information, and control at least one of a position, a direction, and an angle of view of a second virtual camera (214) by using the second control information; and
a drawing section (120) that is adapted to draw an image of the object space (200) viewed from the first virtual camera (212) in a first drawing area (18), and draw an image of the object space (200) viewed from the second virtual camera (214) in a second drawing area (34) at the same time,
wherein the virtual camera control section (108) is adapted to perform at least one of a position conversion process that calculates the second control information based on the first control information so that a relationship between the position of the first virtual camera (212) and the position of the second virtual camera (214) changes, a direction conversion process that calculates the second control information based on the first control information so that a relationship between the direction of the first virtual camera (212) and the direction of the second virtual camera (214) changes, and an angle-of-view conversion process that calculates the second control information based on the first control information so that a relationship between the angle of view of the first virtual camera (212) and the angle of view of the second virtual camera (214) changes, based on operation information from an operation section (40) or a given algorithm.

5. An image generation apparatus (10) comprising:
an object space setting section (106) that is adapted to set a plurality of objects (202, 204) in an object space (200);
a virtual camera control section (108) that is adapted to control at least one of a position, a direction, and an angle of view of a first virtual camera (212) by using first control information, calculate second control information based on the first control information, and control at least one of a position, a direction, and an angle of view of a second virtual camera (214) by using the second control information; and
a drawing section (120) that is adapted to draw an image of the object space (200) viewed from the first virtual camera (212) in a first drawing area (18), and draw an image of the object space (200) viewed from the second virtual camera (214) in a second drawing area (34) at the same time,
wherein the virtual camera control section (108) is adapted to perform at least one of a position change process that changes a relationship between the position of the first virtual camera (212) and the position of the second virtual camera (214), a direction change process that changes a relationship between the direction of the first virtual camera (212) and the direction of the second virtual camera (214), and an angle-of-view change process that changes a relationship between the angle of view of the first virtual camera (212) and the angle of view of the second virtual camera (214), based on operation information from an operation section (40) or a given algorithm.

6. An image generation apparatus (10) comprising:
an object space setting section (106) that is adapted to set a plurality of objects (202, 204) in an object space (200);
a movement/motion control section (110) that is adapted to control at least one of a movement and a motion of a specific object (202) among the plurality of objects (202, 204);
a virtual camera control section (108) that is adapted to calculate first control information based on position information of the specific object (202), control at least one of a position, a direction, and an angle of view of a first virtual camera (212) by using the first control information, calculate second control information based on the position information of the specific object (202), and control at least one of a position, a direction, and an angle of view of a second virtual camera (214) by using the second control information; and
a drawing section (120) that is adapted to draw an image of the object space (200) viewed from the first virtual camera (212) in a first drawing area (18), and draw an image of the object space (200) viewed from the second virtual camera (214) in a second drawing area (34) at the same time.

7. The image generation apparatus (10) as defined in claim 6,
wherein the virtual camera control section (108) is adapted to calculate the first control information based on position information of a first portion of the specific object (202), and calculate the second control information based on position information of a second portion of the specific object (202).

8. The image generation apparatus (10) as defined in any one of claims 1 to 7, further comprising:
a sound generation section (130) for generating sound to be output by a sound output section (44) based on a position of a virtual sound source that is provided in an object among the plurality of objects (202, 204), at least one of the position, the direction, and the angle of view of the first virtual camera (212), and at least one of the position, the direction, and the angle of view of the second virtual camera (214).

9. The image generation apparatus (10) as defined in any one of claims 1 to 7, further comprising:
a sound generation section (130) for generating sound to be output by a sound output section (44) based on a drawing ratio of an object that is one of the plurality of objects (202, 204) and has a virtual sound source in the first drawing area (18) and a drawing ratio of the object in the second drawing area (34).

10. The image generation apparatus (10) as defined in any one of claims 1 to 9,
wherein the virtual camera control section (108) is adapted to control at least one of the position, the direction, and the angle of view of the first virtual camera (212), and at least one of the position, the direction, and the angle of view of the second virtual camera (214) based on position information of an object among the plurality of objects (202, 204) when a given condition has been satisfied so that an intersecting line between a side surface of a truncated pyramidal field of view range defined by the first virtual camera (212) and a side surface of a truncated pyramidal field of view range defined by the second virtual camera (214) corresponds to a position of the object.
